# EUROPEAN PATENT APPLICATION

(11) **EP 4 671 090 A1**
(43) Date of publication of application: **31.12.2025**
(21) Application number: 23923213.5
(22) Date of filing: 21.02.2023
(51) Int. Cl.: B62D 1/16

(54) **POWER TRANSMISSION MECHANISM**

(71) Applicant: Nissan Motor Co., Ltd., Kanagawa 221-0023 (JP)
(72) Inventor: SUGAWARA Naoto, Atsugi-shi, Kanagawa 243-0123 (JP); NARASAKI Takuya, Atsugi-shi, Kanagawa 243-0123 (JP)
(74) Representative: Global IP Europe Patentanwaltskanzlei
(86) International application number: PCT/JP2023/006131
(87) International publication number: WO 2024/176325

(57) **Abstract**

A power transmission mechanism (S1, S1A, S2) includes an input shaft (2); an output shaft (3); and a clutch (4) provided on a power transmission path (P) between the input shaft (2) and the output shaft (3). A speed increasing mechanism (9) is provided between the input shaft (2) and the clutch (4) on the power transmission path (P), and a speed reducing mechanism (10) is provided between the output shaft (3) and the clutch (4) on the power transmission path (P).

## Description

### TECHNICAL FIELD

The present invention relates to a power transmission mechanism.

### BACKGROUND

In a power transmission mechanism that transmits rotational power, a clutch may be provided on a power transmission path. For example, in a power transmission mechanism built into a machine tool, the clutch is engaged during machining to transmit rotational power for machining, and the clutch is disengaged during non-machining periods. Further, in a power transmission mechanism incorporated into a steer-by-wire steering system of a vehicle, the clutch is disengaged while turning a turning wheel by means of steer-by-wire control. Meanwhile, when stopping the steer-by-wire control for some reason, the clutch is engaged, and the steering wheel and the turning wheel are mechanically connected. Patent Literature 1 discloses the related art.

### CITATION LIST

### PATENT LITERATURE

Patent Literature 1: JP 2004-75051 A

### SUMMARY OF INVENTION

### TECHNICAL PROBLEM

In this regard, in a power transmission mechanism that transmits and interrupts rotational power by engaging and disengaging a clutch, a backlash of the clutch may cause a backlash in the rotational direction between the input shaft and the output shaft of the power transmission mechanism. In a steering system, such backlash degrades the operation feeling of a steering wheel and deteriorates the vehicle handling performance. In machine tools, the backlash causes a reduction in the positional accuracy of the machining tool and workpiece, resulting in decreased machining precision. Meanwhile, increasing the machining precision of the clutch to reduce backlash leads to an increase in the cost of the clutch.

An object of the present invention is to reduce a backlash in a rotational direction between an input shaft and an output shaft in a power transmission mechanism that transmits and interrupts rotational power by engaging and disengaging a clutch.

### TECHNICAL SOLUTION

A power transmission mechanism according to an aspect of the present invention includes: an input shaft; an output shaft; and a clutch provided on a power transmission path between the input shaft and the output shaft. A speed increasing mechanism is provided between the input shaft and the clutch on the power transmission path, and a speed reducing mechanism is provided between the output shaft and the clutch on the power transmission path.

### ADVANTAGEOUS EFFECTS

The above power transmission mechanism makes it possible to reduce a backlash in a rotational direction between an input shaft and an output shaft.

### BRIEF DESCRIPTION OF DRAWINGS

[FIG. 1] FIG. 1 is a perspective view illustrating a vehicle steering system having a power transmission mechanism according to a first embodiment.
[FIG. 2] FIG. 2 is a perspective view illustrating a main part of the power transmission mechanism in FIG. 1.
[FIG. 3] FIG. 3 is a cross-sectional view of a main part of the power transmission mechanism in FIG. 1.
[FIG. 4] FIG. 4 is a cross-sectional view of a main part of the power transmission mechanism in FIG. 1 according to a modified example.
[FIG. 5] FIG. 5 is a perspective view illustrating a vehicle steering system having a power transmission mechanism according to a second embodiment.

### DESCRIPTION OF EMBODIMENTS

Hereinafter, a power transmission mechanism according to some embodiments will be described with reference to the drawings. In the following descriptions, configurations having the same functions as those already described are denoted by the same reference numerals, and descriptions thereof will be omitted.

### <First Embodiment>

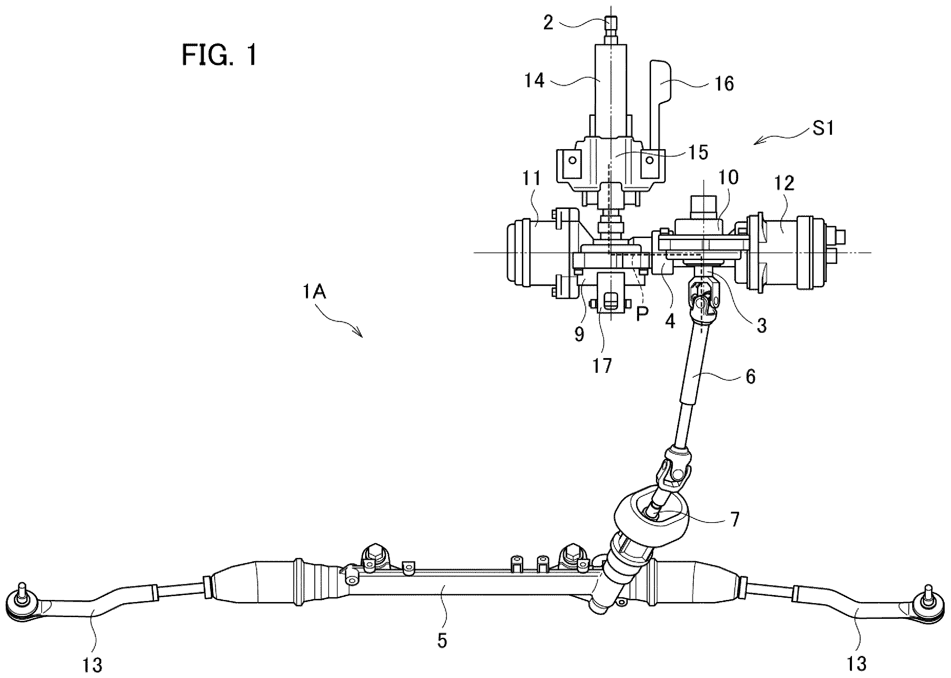

As illustrated in FIGS. 1 to 3, a power transmission mechanism S1 according to the present embodiment is applied to a steer-by-wire steering system 1A of a vehicle. The power transmission mechanism S1 includes an input shaft 2, an output shaft 3, and a clutch 4.

The input shaft 2 is a steering shaft 2. A steering wheel (not illustrated) is attached to the input end of the steering shaft 2, and the steering force of the driver is input to the steering shaft 2 via the steering wheel. The steering shaft is also called a column shaft.

The output shaft 3 is mechanically connected to a steering gear box that is a wheel turning mechanism 5. The output shaft 3 is mechanically connected to a pinion gear shaft 7 of the steering gear box via an intermediate shaft 6. The intermediate shaft 6 is mechanically connected to the output shaft 3 and the pinion gear shaft 7 via respective cardan joints.

The clutch 4 is provided on a power transmission path P between the input shaft 2 and the output shaft 3. The clutch 4 transmits rotational power between the input shaft 2 and the output shaft 3 in an engaged state, and interrupts the transmission of rotational power between the input shaft 2 and the output shaft 3 in a disengaged state. In the illustrated example, the clutch 4 is a friction-type electromagnetic clutch. When not energized, the friction plates are pressed together by the biasing force of the internal spring, and the clutch 4 is in an engaged state. When energized, the pressing of the friction plates is released against the biasing force of the spring by the electromagnetic force generated by the internal coil, and the clutch 4 is in a disengaged state.

The clutch 4 is housed in a casing, and a notch 8A, which is a fragile portion, is formed in the casing. The notch 8A is provided at a position in the vicinity of a flexible coupling 8B which will be described later.

A speed increasing mechanism 9 is provided between the input shaft 2 and the clutch 4, and a speed reducing mechanism 10 is provided between the clutch 4 and the output shaft 3. In the illustrated example, the speed increasing mechanism 9 and the speed reducing mechanism 10 are formed using respective worm gears. A publicly known backlash suppression mechanism may be built into each worm gear. The backlash suppression mechanism suppresses a backlash of the worm gear by biasing the worm toward the worm wheel, utilizing the elastic restoring force of the spring. Thus, a backlash in the speed increasing mechanism 9 and the speed reducing mechanism 10 can be sufficiently suppressed.

The speed increasing mechanism 9 is constituted of a speed reducer that is arranged so as to output the rotation of the input shaft 2 by increasing the speed, and the speed reducing mechanism 10 is constituted of a speed reducer that is arranged so as to output the rotation to the output shaft 3 by reducing the speed. Specifically, the speed increasing mechanism 9 includes a worm wheel 9A and a worm shaft 9B in which a worm meshing with the worm wheel 9A is formed. The speed reducing mechanism 10 includes a worm wheel 10A and a worm shaft 10B in which a worm meshing with the worm wheel 10A is formed. The rotation shaft of the worm wheel 9A of the speed increasing mechanism 9 is the input shaft 2 of the power transmission mechanism S1, and the rotation shaft of the worm wheel 10A of the speed reducing mechanism 10 is the output shaft 3 of the power transmission mechanism S1.

The worm shaft 9B of the speed increasing mechanism 9 is connected to one rotation shaft of the clutch 4 via the flexible coupling 8B which is a fragile portion. The other rotation shaft of the clutch 4 is the worm shaft 10B of the speed reducing mechanism 10. The flexible coupling 8B can transmit rotational power between the worm shaft 9B of the speed increasing mechanism 9 and one rotation shaft of the clutch 4 while allowing eccentricity, angular deflection, and vibration therebetween. In the illustrated example, although the flexible coupling 8B is a slit-type flexible coupling, other types of flexible couplings such as a disk-type flexible coupling and an Oldham-type flexible coupling may be used.

In the power transmission mechanism S1, the power transmission path P from the input shaft 2 to the output shaft 3 is constituted of the worm wheel 9A and worm shaft 9B of the speed increasing mechanism 9, the worm wheel 10A and worm shaft 10B of the speed reducing mechanism 10, and the clutch 4.

The speed increasing mechanism 9, the clutch 4, and the speed reducing mechanism 10 are arranged in this order along a direction orthogonal to the steering shaft 2, that is, along a direction orthogonal to the vehicle front-rear direction. Further, the speed increasing mechanism 9, the clutch 4, and the speed reducing mechanism 10 are also arranged along a direction orthogonal to the output shaft 3. That is, the power transmission path P passing through the power transmission mechanism S1 is formed into a crank shape that is bent substantially at a right angle between the speed increasing mechanism 9 and the speed reducing mechanism 10 as illustrated by a bold dashed line in FIG. 1, and the steering shaft 2 and the output shaft 3 are arranged so as to be offset in the vehicle width direction.

As illustrated in FIG. 1, in the steer-by-wire steering system 1A, the worm shaft 9B of the speed increasing mechanism 9 is coupled to the output shaft of a reaction force motor 11. The reaction force motor 11 generates a steering reaction force on the input shaft 2 while the clutch 4 is disengaged and the steer-by-wire control is performed. The output of the reaction force motor 11 is reduced in speed and torque-amplified by the speed increasing mechanism 9, and transmitted to the steering wheel attached to the input shaft 2 as a steering reaction force.

Further, the worm shaft 10B of the speed reducing mechanism 10 is coupled to the output shaft of a wheel turning motor 12. The wheel turning motor 12 generates a driving force, which turns a turning wheel, on the output shaft 3 while the clutch 4 is disengaged and the steer-by-wire control is performed. The output of the wheel turning motor 12 is reduced in speed and torque-amplified by the speed reducing mechanism 10, and transmitted to the output shaft 3 as a wheel turning drive force. The wheel turning drive force is input to the pinion gear shaft 7 of the steering gear box via the intermediate shaft 6. The reaction force motor 11 and the wheel turning motor 12 function as driving force sources of the power steering mechanism while the steer-by-wire control is stopped and the clutch 4 is engaged.

The steering gear box that is the wheel turning mechanism 5 includes a pinion gear formed on the pinion gear shaft 7 and a rack gear formed on a rack bar (not illustrated) in the steering gear box. When the pinion gear shaft 7 rotates, the rotational motion is converted to linear motion by meshing between the pinion gear and the rack gear, and the rack bar is moved in its axial direction by the converted linear motion. As the rack bar moves in the axial direction, the wheel turning drive force is transmitted to the knuckle arm of the hub carrier of the turning wheel via each tie rod 13 swingably attached to both ends of the rack bar, thereby turning the turning wheel.

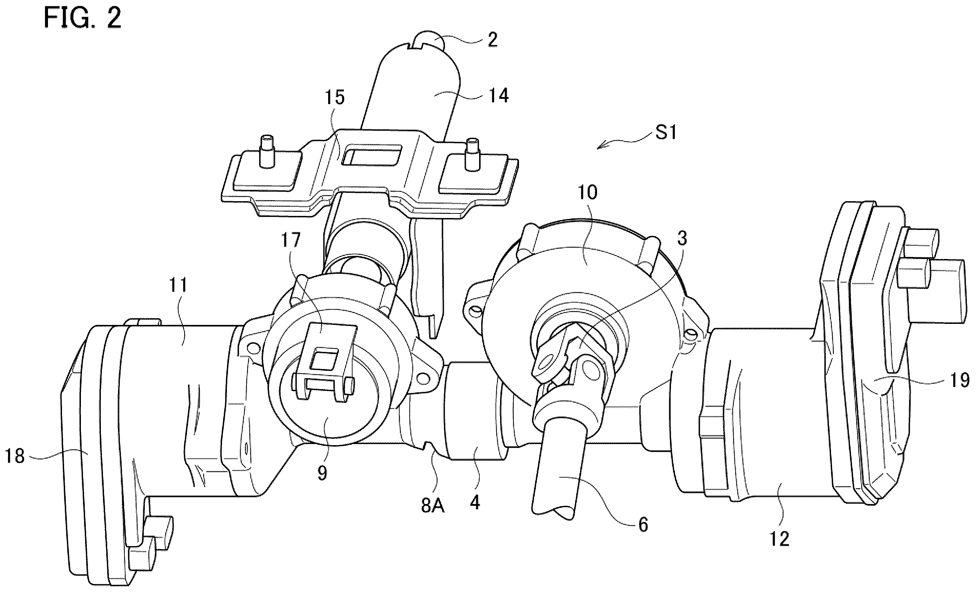

As illustrated in FIGS. 1 and 2, the steering shaft 2, which serves as the input shaft 2, is housed within the steering column 14. The steering column 14 is attached to the vehicle body via the first bracket 15. A tilt mechanism is built into the first bracket 15. By operating the tilt lever 16, a tilt angle of the steering column 14 can be adjusted. The case of the speed increasing mechanism 9 is attached to the front end of the steering column 14. The case of the speed increasing mechanism 9 is attached to the vehicle body via the second bracket 17. The tilt central shaft of the steering column 14 is provided in the second bracket 17.

The reaction force motor 11 is integrally configured with a reaction force motor ECU (electrical control unit) 18 that controls the reaction force motor 11. The wheel turning motor 12 is integrally configured with a wheel turning motor ECU 19 that controls the wheel turning motor 12. The reaction force motor ECU 18 and the wheel turning motor ECU 19 are connected to the communication network of the vehicle such that they can communicate with each other. The reaction force motor ECU 18 is connected to various sensors such as a torque sensor built into the steering column 14 in addition to the clutch 4. The reaction force motor ECU 18 calculates an angle required for turning based on the detected values of various sensors such as a detected torque of a torque sensor, information on the running state of the vehicle, or the like, and transmits the calculated result to the wheel turning motor ECU 19 to control the wheel turning motor 12 via the wheel turning motor ECU 19.

The reaction force motor ECU 18 and the wheel turning motor ECU 19 determine whether the steering system 1A is normal or abnormal while communicating with each other. When the reaction force motor ECU 18 and the wheel turning motor ECU 19 determine that there is no abnormality in the steering system 1A, they perform the steer-by-wire control by disengaging the clutch 4. In the steer-by-wire control, the reaction force motor ECU 18 generates a steering reaction force on the input shaft 2 using the reaction force motor 11, and the wheel turning motor ECU 19 turns the turning wheel using the wheel turning motor 12. At this time, the reaction force motor 11 and the wheel turning motor 12 are mechanically separated from each other.

Meanwhile, for example, when either the reaction force motor 11 or the wheel turning motor 12 does not operate normally, the reaction force motor ECU 18 or the wheel turning motor ECU 19 determines that an abnormality has occurred in the steering system 1A, and stops the steer-by-wire control. Then, for example, the reaction force motor ECU 18 mechanically connects the steering wheel to the turning wheel by engaging the clutch 4. At this time, the operation of the ECU that is not operating normally is stopped, and the power steering function is provided through control of the normally operating one of the reaction force motor 11 and the wheel turning motor 12. For example, when the reaction force motor 11 stops operating normally, the wheel turning motor ECU 19, solely by controlling the wheel turning motor 12, generates a steering reaction force on the input shaft 2 and turns the turning wheel. Further, when the wheel turning motor 12 stops operating normally, the reaction force motor ECU 18, solely by controlling the reaction force motor 11, generates a steering reaction force on the input shaft 2 and turns the turning wheel.

The operation and effect of the power transmission mechanism S1 according to the present embodiment will be described.
(1) The power transmission mechanism S1 includes the input shaft 2, the output shaft 3, and the clutch 4 provided on the power transmission path P between the input shaft 2 and the output shaft 3. The speed increasing mechanism 9 is provided between the input shaft 2 and the clutch 4 on the power transmission path P, and the speed reducing mechanism 10 is provided between the output shaft 3 and the clutch 4 on the power transmission path P. Therefore, the backlash of the clutch 4 in the rotational direction in a state where the clutch 4 is engaged is reduced to a value multiplied by the reciprocal of the speed increasing ratio of the speed increasing mechanism 9 and transmitted to the input shaft 2, and is reduced to a value multiplied by the speed reducing ratio of the speed reducing mechanism 10 and transmitted to the output shaft 3. For example, if the backlash of the clutch 4 in the rotational direction is 20° around the rotation center, and the speed increasing ratio of the speed increasing mechanism 9 is 20/1, and the speed reducing ratio of the speed reducing mechanism 10 is 1/20, the backlash between the input shaft 2 and the output shaft 3 is reduced to 1°. Thus, according to the power transmission mechanism S1, even when using the clutch 4 having a large backlash in the engaged state, the backlash in the rotational direction between the input shaft 2 and the output shaft 3 can be reduced.
   Moreover, according to the power transmission mechanism S1, since the clutch 4 is provided in the section where the rotation is increased in speed between the speed increasing mechanism 9 and the speed reducing mechanism 10 on the power transmission path P, the transmission torque required for the clutch 4 can be reduced, thereby enabling the size reduction of the clutch 4.
(2) In the power transmission mechanism S1, the input shaft 2 is the steering shaft 2, and the output shaft 3 is mechanically connected to the wheel turning mechanism 5 of the vehicle. That is, the power transmission mechanism S1 constitutes a part of the steering system 1A of the vehicle. According to the power transmission mechanism S1, since the backlash in the rotational direction between the input shaft 2 and the output shaft 3 can be reduced, the steering feeling of the driver can be improved by reducing the backlash felt by the driver through the steering operation. In addition, the error of the wheel turning angle of the turning wheel can be reduced, thereby improving the vehicle motion performance.
(3) At the time of a front collision of a vehicle, the front of the vehicle may be crushed, and the steering gearbox may move rearward relative to the vehicle body. In the conventional wheel turning mechanism, when the steering gearbox moves rearward, a collision load is transmitted to the steering shaft 2 via the intermediate shaft 6, and thus the steering wheel may move rearward relative to the vehicle body.
   In contrast, in the power transmission mechanism S1, the speed increasing mechanism 9, the clutch 4, and the speed reducing mechanism 10 are arranged along the direction orthogonal to the steering shaft 2, that is, the direction orthogonal to the vehicle front-rear direction. For this reason, the steering shaft 2 and the output shaft 3 are arranged so as to be offset in the vehicle width direction (hereinafter, a portion of the power transmission mechanism S1 in which the speed increasing mechanism 9, the clutch 4, and the speed reducing mechanism 10 are arranged in a line is also referred to as a lateral-direction extending portion). Accordingly, even if the collision load is input to the output shaft 3 at the time of the front collision of the vehicle, the lateral extending portion rotates or deforms, thereby preventing the collision load from being directly transmitted to the steering shaft 2. This makes it possible to suppress the rearward movement of the steering wheel, thereby improving the occupant protection performance. Here, the extending direction of the lateral-direction extending portion is not limited to the direction orthogonal to the steering shaft 2. In another embodiment, the speed increasing mechanism 9, the clutch 4, and the speed reducing mechanism 10 may be arranged along a direction intersecting the steering shaft 2 at an angle other than a right angle in plan view. Even in this case, since the steering shaft 2 and the output shaft 3 are arranged so as to be offset in the vehicle width direction, the same effect can be obtained.
(4) In the power transmission mechanism S1, the flexible coupling 8B, which is a fragile portion, is provided on the power transmission path P between the speed increasing mechanism 9 and the clutch 4. In addition, the notch 8A, which is a fragile portion, is formed at a position in the vicinity of the flexible coupling 8B in the casing of the clutch 4. For this reason, when a collision load is input to the output shaft 3 at the time of a front collision of a vehicle, the casing breaks from the notch 8A as a starting point, and thus the flexible coupling 8B is deformed. Therefore, the load input to the steering shaft 2 is more reliably reduced, and the rearward movement of the steering wheel at the time of a vehicle collision is further suppressed, thereby making it possible to further improve the occupant protection performance.
(5) The power transmission mechanism S1 includes the flexible coupling 8B that is deformed by the collision load input to the output shaft 3 at the time of a front collision of a vehicle. As long as the deformation amount of the flexible coupling 8B is within an allowable range, the flexible coupling 8B can transmit rotational power in a deformed state. Therefore, the power transmission mechanism S1 makes it possible to turn the turning wheel by operating the steering wheel after the front collision of the vehicle, thereby improving the limp-home performance.

### <Modified Example>

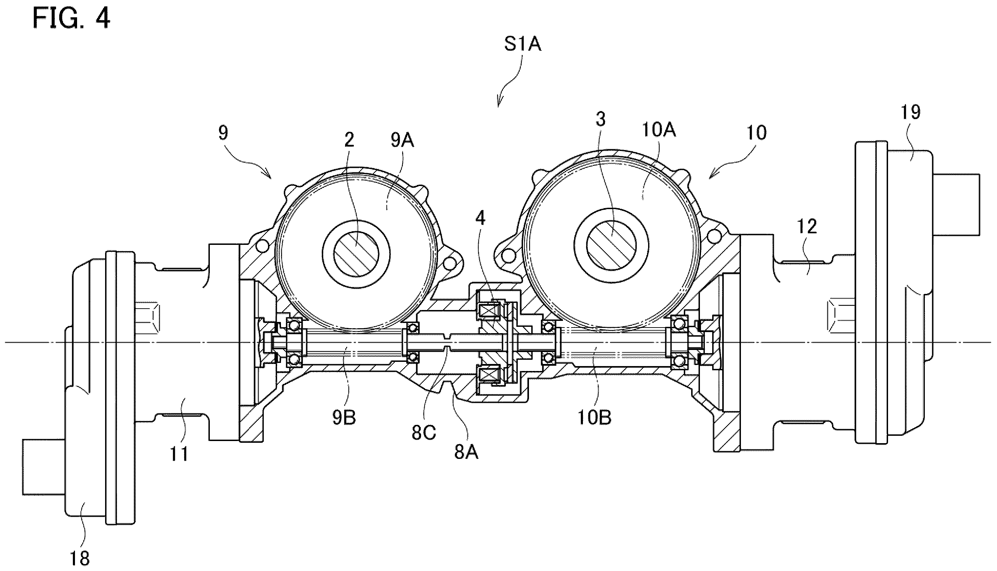

In the power transmission mechanism S1, the notch 8A and the flexible coupling 8B are provided as the fragile portion; however, as illustrated in FIG. 4, a small-diameter portion 8C as a fragile portion may be formed in the worm shaft 9B of the speed increasing mechanism 9 instead of the flexible coupling 8B. The small-diameter portion 8C is a portion having a locally smaller outer diameter than other portions.

In a power transmission mechanism S1A according to a present modified example, the small-diameter portion 8C is formed between the speed increasing mechanism 9 and the clutch 4. Since the power transmission mechanism S1A has the same configuration as in the first embodiment except that the small-diameter portion 8C is provided instead of the flexible coupling 8B, the operations and effects of (1) to (3) described above can be obtained.

(6) In the power transmission mechanism S1A, the small-diameter portion 8C, which is a fragile portion, is provided on the power transmission path P between the speed increasing mechanism 9 and the clutch 4. In addition, the notch 8A, which is a fragile portion, is formed at a position in the vicinity of the small-diameter portion 8C in the casing of the clutch 4. For this reason, when a collision load is input to the output shaft 3 at the time of a front collision of a vehicle, the casing breaks from the notch 8A as a starting point, and thus a worm shaft is broken in the small-diameter portion 8C. Therefore, in the same manner as the operation and effect of (4) described above, the load input to the input shaft 2 is reduced, and the rearward movement of the steering wheel at the time of a vehicle collision is suppressed, thereby improving the occupant protection performance.

The flexible coupling 8B and the small-diameter portion 8C may be provided at other positions as long as they are provided on the power transmission path P between the speed increasing mechanism 9 and the speed reducing mechanism 10. The section between the speed increasing mechanism 9 and the speed reducing mechanism 10 extends in the vehicle width direction, and one end of the section is arranged in the vicinity of the point where the steering column 14 is attached to the vehicle body, and the output shaft 3 is arranged at the other end. That is, the point attached to the vehicle body and the input point of the collision load are arranged apart from each other in the vehicle width direction. Therefore, by arranging the flexible coupling 8B and the small-diameter portion 8C in the section, they can be easily deformed or broken by the collision load at the time of the front collision of the vehicle. Further, for the same reason as above, the notch 8A may be provided at other positions between the speed increasing mechanism 9 and the speed reducing mechanism 10. Specifically, for example, the flexible coupling 8B and the small-diameter portion 8C may be provided on the power transmission path P between the clutch 4 and the speed reducing mechanism 10. The notch 8A may be provided in a region between the clutch 4 and the speed reducing mechanism 10 in the casing of the clutch 4. More specifically, the flexible coupling 8B may be provided between the worm formed on the worm shaft 10B and the clutch 4. In addition, the small-diameter portion 8C may be formed on the worm shaft 10B between the worm formed on the worm shaft 10B and the clutch 4.

### <Second Embodiment>

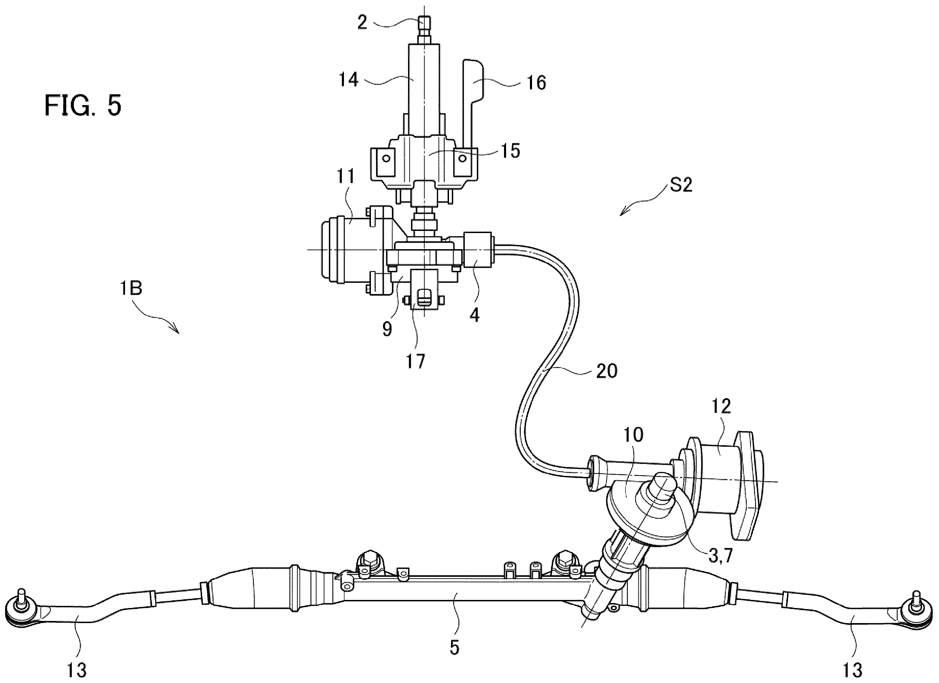

A vehicle steering system 1B including a power transmission mechanism S2 according to a second embodiment will be described with reference to FIG. 5. In the second embodiment, only configurations different from those of the first embodiment will be described, and configurations having the same functions as those already described in the first embodiment and the modified example will be denoted by the same reference numerals, and descriptions thereof will be omitted.

In the power transmission mechanism S2, the clutch 4 and the speed reducing mechanism 10 are connected to each other by a flexible torque transmission wire 20, and the speed reducing mechanism 10 is integrated with the steering gear box. The power transmission mechanism S2 does not have the intermediate shaft 6, and thus the output shaft 3 of the power transmission mechanism S2, that is, the rotation shaft of the worm wheel 10A of the speed reducing mechanism 10 is the pinion gear shaft 7 of the steering gear box.

As in the first embodiment, the power transmission mechanism S2 includes the input shaft 2, the output shaft 3, and the clutch 4 provided on the power transmission path P between the input shaft 2 and the output shaft 3. The speed increasing mechanism 9 is provided between the input shaft 2 and the clutch 4 on the power transmission path P, and the speed reducing mechanism 10 is provided between the output shaft 3 and the clutch 4 on the power transmission path P. Further, the input shaft 2 is the steering shaft 2, and the output shaft 3 is mechanically connected to the wheel turning mechanism 5 of the vehicle. Therefore, the power transmission apparatus according to the present embodiment makes it possible to obtain the operations and effects of (1) and (2) described above.

(7) In the power transmission mechanism S2, the clutch 4 and the speed reducing mechanism 10 are connected to each other by the flexible torque transmission wire 20. For this reason, even if a collision load is input to the output shaft 3 at the time of a front collision of a vehicle, the load input to the input shaft 2 can be suppressed by deforming the torque transmission wire 20. Therefore, the rearward movement of the steering wheel at the time of a vehicle collision can be suppressed more reliably, thereby making it possible to further improve the occupant protection performance.

In the power transmission mechanism S2, the clutch 4 and the speed reducing mechanism 10 are connected to each other by the torque transmission wire 20; however, the speed increasing mechanism 9 and the clutch 4 may be connected by a torque transmission wire instead of or in addition to this configuration. Even in this case, the same operation and effect as described above can be obtained.

The embodiments described above and the modified example thereof (hereinafter, embodiments or the like) are merely examples which are described to facilitate understanding of the invention. The technical scope of the invention is not limited to the specific technical matters disclosed in the embodiments or the like described above, and also includes various modifications, changes, alternative techniques, and the like which can be easily derived therefrom.

For example, the clutch 4 in the embodiments or the like described above is a disk-type friction clutch. However, the clutch 4 may be another type of friction clutch, such as a drum-type friction clutch or a cone-type friction clutch. Alternatively, the clutch 4 may be another type of clutch, such as a roller clutch or a meshing clutch like a tooth clutch.

In addition, although the speed increasing mechanism 9 and the speed reducing mechanism 10 using a worm gear are used in the embodiments or the like described above, other types of speed increasing mechanism and speed reducing mechanism may be used. The speed increasing mechanism 9 and the speed reducing mechanism 10 may be constructed using, for example, planetary gears or bevel gears in addition to or instead of the worm gears. However, the worm gears have the advantage of achieving large speed increasing ratios or large speed reducing ratios, and also have the advantage of being able to incorporate the backlash suppression mechanism described above. Further, the speed increasing mechanism 9 and the speed reducing mechanism 10 in the embodiments or the like described above are single-stage speed increasing and speed reducing mechanisms, respectively, without gear shift functions. However, each of the speed increasing mechanism 9 and the speed reducing mechanism 10 may have a gear shift function of two or more stages.

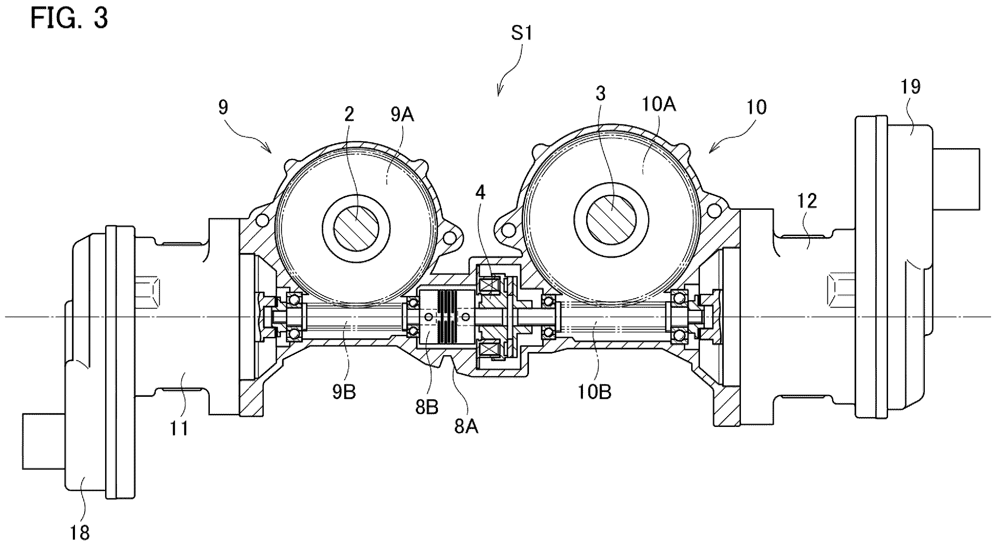

In the embodiments or the like described above, the diameter of the worm wheel 10A of the speed reducing mechanism 10 is larger than the diameter of the worm wheel 9A of the speed increasing mechanism 9 (see FIG. 3). That is, the speed reducing ratio of the speed reducing mechanism 10 is smaller than the reciprocal of the speed increasing ratio of the speed increasing mechanism 9. However, the relationship between the speed increasing ratio and the speed reducing ratio is not particularly limited. The speed increasing ratio and the speed reducing ratio may be set in such a way that the rotation angle of the input shaft 2 and the rotation angle of the output shaft 3 match each other. In addition, the output shaft 3 may be set to rotate less than one rotation (for example, 0.8 rotations) or more than one rotation (for example, 1.2 rotations) while the input shaft 2 rotates once.

In the embodiments or the like described above, the power transmission mechanism is built into the steering system of the vehicle as an example. However, the power transmission mechanism is of course applicable to other industrial machines such as machine tools, industrial robots, and construction machines.

### REFERENCE SIGNS LIST

- S1, S1A, S2: Power transmission mechanism
- 2: Steering shaft (input shaft)
- 3: Output shaft
- 4: Clutch
- 5: Wheel turning mechanism
- 8A: Notch (fragile portion)
- 8B: Flexible coupling (fragile portion)
- 8C: Small-diameter portion (fragile portion)
- 9: Speed increasing mechanism
- 10: Speed reducing mechanism
- P: Power transmission path

## Claims

1. A power transmission mechanism, comprising:
an input shaft;
an output shaft;
a clutch provided on a power transmission path between the input shaft and the output shaft;
a speed increasing mechanism provided between the input shaft and the clutch on the power transmission path; and
a speed reducing mechanism provided between the output shaft and the clutch on the power transmission path.

2. The power transmission mechanism according to claim 1, wherein
the input shaft is a steering shaft, and the output shaft is mechanically connected to a wheel turning mechanism of a vehicle.

3. The power transmission mechanism according to claim 2, wherein
the speed increasing mechanism, the clutch, and the speed reducing mechanism are arranged along a direction intersecting the steering shaft.

4. The power transmission mechanism according to claim 3, wherein
a fragile portion, which is deformed or broken by a collision load input to the output shaft at a time of collision of the vehicle, is provided between the speed increasing mechanism and the speed reducing mechanism.

5. The power transmission mechanism according to claim 4, wherein
the fragile portion is a flexible coupling.
